# EUROPÄISCHE PATENTSCHRIFT

(11) **EP 4 412 878 B1**
(45) Veröffentlichungstag und Bekanntmachung des Hinweises auf die Patenterteilung: **10.12.2025**
(21) Anmeldenummer: 22790228.5
(22) Anmeldetag: 05.10.2022
(51) Int. Cl.: B60T 8/32

(54) **BREMSVORRICHTUNG FÜR EIN HYDRAULISCHES BREMSSYSTEM EINES FAHRZEUGS UND VERFAHREN ZUM BETREIBEN EINES HYDRAULISCHEN BREMSSYSTEMS EINES FAHRZEUGS**
BRAKE DEVICE FOR HYDRAULIC BRAKE SYSTEM AND METHOD OF OPERATING IT
DISPOSITIF DE FREINAGE POUR UN SYSTÈME DE FREINAGE HYDRAULIQUE D'UN VÉHICULE ET PROCÉDÉ DE FONCTIONNEMENT D'UN TEL SYSTÈME

(30) Priorität: 05.10.2021 DE 102021211201
(43) Veröffentlichungstag der Anmeldung: 14.08.2024
(73) Patentinhaber: Robert Bosch GmbH, 70469 Stuttgart (DE)
(72) Erfinder: MUTSCHLER, Jan, 72172 Sulz am Neckar (DE); MOIA, Alessandro, 71088 Holzgerlingen (DE)
(86) Internationale Anmeldenummer: PCT/DE2022/100738
(87) Internationale Veröffentlichungsnummer: WO 2023/057012

(56) Entgegenhaltungen:
- EP-A1- 3 124 344
- DE-A1- 3 904 614
- US-A- 6 007 161
- US-A1- 2009 033 144
- US-A1- 2015 360 659

## Beschreibung

Die Erfindung betrifft eine Bremsvorrichtung für ein hydraulisches Bremssystem eines Fahrzeugs und ein hydraulisches Bremssystem für ein Fahrzeug. Des Weiteren betrifft die vorliegende Erfindung ein Verfahren zum Betreiben eines hydraulischen Bremssystems eines Fahrzeugs.

### Stand der Technik

In der EP 3 124 344 A1 ist ein Bremssystem für ein Fahrzeug beschrieben, welches eine hydraulische Aktorvorrichtung aufweist, deren mittels eines Motors der Aktorvorrichtung verstellbarer Kolben eine Speicherkammer der Aktorvorrichtung in ein erstes Teilvolumen und in ein zweites Teilvolumen unterteilt. Das erste Teilvolumen der Speicherkammer auf einer ersten Seite des verstellbaren Kolbens ist an einem Bremszylinder derart hydraulisch angebunden, dass bei einer zu- oder abnehmenden Betätigung eines an dem Bremszylinder angebundenen Bremsbetätigungselements Bremsflüssigkeit zwischen dem Bremszylinder und dem ersten Teilvolumen der Speicherkammer transferierbar ist. Das zweite Teilvolumen der Speicherkammer auf einer zweiten Seite des Kolbens ist an einem Radbremszylinder hydraulisch angebunden, weshalb Bremsflüssigkeit zwischen dem zweiten Teilvolumen der Speicherkammer und dem Radbremszylinder transferierbar ist. Außerdem ist der Radbremszylinder an einem Bypass hydraulisch angebunden, welcher bei einem Vorliegen des verstellbaren Kolbens der Aktorvorrichtung in einer Normalstellung so an dem ersten Teilvolumen der Speicherkammer mündet, dass auch zwischen dem Bremszylinder und dem Radbremszylinder über den Bypass ein Bremsflüssigkeitstransfer möglich ist. Der verstellbare Kolben der Aktorvorrichtung ist mittels einer Feder in seiner Normalstellung gehalten. Allerdings kann der verstellbare Kolben der Aktorvorrichtung mittels ihres Motors entgegen der Kraft der Feder aus seiner Normalstellung verstellt werden, wodurch ab einem Verstellen des Kolbens aus seiner Normalstellung um zumindest einen vorgegebenen Mindestverstellweg die über den Bypass verlaufende hydraulische Verbindung zwischen dem Bremszylinder und dem Radbremszylinder unterbrochen wird. Nach einem Unterbrechen der hydraulischen Verbindung zwischen dem Bremszylinder und dem Radbremszylinder soll ein in dem Radbremszylinder vorliegender Bremsdruck mittels eines weiteren Verschiebens des verstellbaren Kolbens der Aktorvorrichtung modulierbar sein.

Allerdings erfordert der in dem vorausgehenden Absatz beschriebene Betrieb der Aktorvorrichtung des Bremssystems der EP 3 124 344 A1 eine Ausbildung des verstellbaren Kolbens mit einer an dem ersten Teilvolumen der Speicherkammer angrenzenden ersten Fläche auf seiner ersten Seite, welche größer ist als eine an dem zweiten Teilvolumen der Speicherkammer angrenzende zweite Fläche des Kolbens auf seiner zweiten Seite. Zusätzlich dichtet der Kolben das erste Teilvolumen der Speicherkammer nur dann flüssigkeitsdicht von dem zweiten Teilvolumen der Speicherkammer ab, wenn ein in dem ersten Teilvolumen vorliegender erster Druck größer als ein in dem zweiten Teilvolumen vorherrschender zweiter Druck ist. Dies bedeutet, dass der Motor der Aktorvorrichtung zum Verstellen des Kolbens aus seiner Normalstellung sowohl eine Druckdifferenz zwischen dem ersten Druck und dem zweiten Druck als auch eine Flächendifferenz zwischen der ersten Fläche auf der ersten Seite des Kolbens und der zweiten Fläche auf der zweiten Fläche des Kolbens kraftmäßig zu überwinden hat.

### Offenbarung der Erfindung

Die vorliegende Erfindung schafft eine Bremsvorrichtung für ein hydraulisches Bremssystem eines Fahrzeugs mit den Merkmalen des Anspruchs 1, ein hydraulisches Bremssystem für ein Fahrzeug mit den Merkmalen des Anspruchs 9 und ein Verfahren zum Betreiben eines hydraulischen Bremssystems eines Fahrzeugs mit den Merkmalen des Anspruchs 10.

### Vorteile der Erfindung

Die vorliegende Erfindung schafft vorteilhafte Möglichkeiten zum Gewährleisten eines gewünschten Bremsdrucks in mindestens einem Radbremszylinder eines Fahrzeugs. Unter dem Fahrzeug kann sowohl ein Fahrzeug mit nur zwei Rädern als auch ein Fahrzeug mit mehr als zwei Rädern verstanden werden. Das Fahrzeug kann ein Fahrzeug ohne einen motorisierten Antrieb oder ein mit einem Motorantrieb ausgestattetes Fahrzeug sein. Die vorliegende Erfindung kann z.B. für ein (mittels Muskelkraft angetriebenes) Fahrrad, ein motorisiertes Zweirad, ein Elektrorad, ein Motorrad und ein Kraftfahrzeug, wie beispielsweise einen Personenkraftwagen oder einen Lastkraftwagen, genutzt werden.

Die vorliegende Erfindung schafft Bremsvorrichtungen, bzw. hydraulische Bremssysteme, bei welchen bei einem Vorliegen des jeweiligen verstellbaren Kolbens in seiner Normalstellung Bremsflüssigkeit zwischen dem an dem benachbarten ersten Teilvolumen angebundenen Bremszylinder und dem an dem benachbarten zweiten Teilvolumen angebundenen Radbremszylinder transferierbar ist, während dieser Bremsflüssigkeitstransfer mittels des aus seiner Normalstellung um zumindest den vorgegebenen Mindestverstellweg verstellten Kolbens unterbunden ist. Im Unterschied zu dem zuvor beschriebenen Stand der Technik (mit einem ersten Druck in dessen erstem Teilvolumen und einem zweiten Druck in dessen zweitem Teilvolumen) kann jedoch der verstellbare Kolben der erfindungsgemäßen Bremsvorrichtung (mit dem gleichen ersten Druck in seinem ersten Teilvolumen und dem gleichen zweiten Druck in seinem zweiten Teilvolumen) mittels einer geringeren Kraft und mit einem deutlich reduzierten Energieverbrauch aus seiner Normalstellung um den vorgegebenen Mindestverstellweg verstellt werden.

Die erfindungsgemäße Bremsvorrichtung, bzw. das entsprechende hydraulische Bremssystem, weist deshalb gegenüber dem vorausgehend beschriebenen Stand der Technik eine deutlich verbesserte Performance und einen signifikant reduzierten Energieverbrauch auf. Zusätzlich realisiert die vorliegende Erfindung eine Behebung der Schwächen des Stands der Technik unter Beibehaltung des Funktionsumfangs und aller Vorteile des Stands der Technik.

Eine Realisierung der vorliegenden Erfindung benötigt außer einem Rückschlagventil keine weiteren aktiven Komponenten. Eine technische Umsetzung der vorliegenden Erfindung ist deshalb vergleichsweise kostengünstig und steigert einen Bauraumbedarf nicht/kaum.

Bei einer vorteilhaften Ausführungsform der Bremsvorrichtung weist der Kolben einen zylinderförmigen Grundkörper mit einem an dem Grundkörper hervorstehenden Ringabschnitt auf, wobei der Ringabschnitt des Kolbens das auf einer ersten Seite des Ringabschnitts liegende erste Teilvolumen des Speichervolumens von dem auf einer zweiten Seite des Ringabschnitts liegenden zweiten Teilvolumen des Speichervolumens flüssigkeitsdicht abdichtet, und wobei der zylinderförmige Grundkörper sich ausgehend von einer auf der ersten Seite des Ringabschnitts liegenden ersten Aussparung durchgehend durch das Speichervolumen bis zu einer auf der zweiten Seite des Ringabschnitts liegenden zweiten Aussparung erstreckt. Der zylinderförmige Grundkörper des Kolbens kann somit auch als eine durchgängige Kolbenstange umschrieben werden. Entsprechend kann der Kolben als ein durchgehender Kolben bezeichnet werden. Aufgrund der hier beschriebenen vorteilhaften Ausbildung des Kolbens erfordert ein Verstellen des Kolbens aus seiner Normalstellung um zumindest den Mindestverstellweg bei Vorliegen eines ersten Drucks in dem ersten Teilvolumen und eines zweiten Drucks in dem zweiten Teilvolumen eine deutlich geringere Kraft als beim vorausgehend beschriebenen Stand der Technik mit dem gleichen ersten Druck in dessen erstem Teilvolumen und dem gleichen zweiten Druck in dessen zweitem Teilvolumen. Dies trägt zur zusätzlichen Reduzierung des Energieverbrauchs der hier beschriebenen Ausführungsform der Bremsvorrichtung bei.

Vorzugsweise ist der der Kolben mittels mindestens eines Führungsstiftes geführt. Auf diese Weise kann der aus seiner Normalstellung um zumindest den Mindestverstellweg verstellte Kolben, bzw. der in seine Normalstellung zurück verstellte Kolben verlässlich gegen unerwünschte Rotationen gesichert sein.

Bei einer bevorzugten Ausführungsform der Bremsvorrichtung sind die Bypassleitung und das Rückschlagventil innerhalb des Kolbens ausgebildet. Durch die Integration der Bypassleitung und des Rückschlagventils in den Kolben kann ein Bauraumbedarf der hier beschriebenen Ausführungsform der Bremsvorrichtung unter Beibehaltung ihres Funktionsumfangs reduziert werden.

Vorteilhafterweise kann das innerhalb des Kolbens ausgebildete Rückschlagventil bei einem Vorliegen des Kolbens in seiner Normalstellung mittels eines an der Bremsvorrichtung fest angeordneten und in eine Öffnung des Kolbens hineinragenden Stößels in seinen offenen Zustand gehalten sein, während der aus seiner Normalstellung um zumindest den Mindestverstellweg verstellte Kolben so gegenüber dem Stößel verstellt ist, dass das Rückschlagventil in seinen geschlossenen Zustand geschaltet ist. Die Verwendung des fest angeordneten/ortsfesten Stößels ermöglicht eine vergleichsweise einfache bauliche Umsetzung des Kolbens mit seinem in den Kolben integrierten Rückschlagventil und der durch den Kolben verlaufenden Bypassleitung.

Beispielsweise kann das innerhalb des Kolbens ausgebildete Rückschlagventil einen Ventilkörper und eine Federeinrichtung umfassen, wobei der Ventilkörper bei einem Vorliegen des Kolbens in seiner Normalstellung mittels des in die Öffnung des Kolbens hineinragenden Stößels entgegen einer Kraft der Federeinrichtung von einer an der Öffnung ausgebildeten Verengung weg gehalten ist, während ab Verstellen des Kolbens aus seiner Normalstellung um zumindest den Mindestverstellweg die Kraft der Federeinrichtung den Ventilkörper so gegen die Verengung drückt, dass mittels des mechanischen Kontakts des Ventilkörpers mit der Verengung ein auf einer ersten Seite der Verengung liegender äußerer Abschnitt der Öffnung flüssigkeitsdicht von einem auf einer zweiten Seite der Verengung liegenden inneren Abschnitt der Öffnung abgedichtet ist. Die hier beschriebene Ausbildung des Kolbens ist vergleichsweise kostengünstig herstellbar.

Insbesondere kann die innerhalb des Kolbens ausgebildete Bypassleitung eine erste radiale Kontaktbohrung durch den Kolben, welche sich von dem ersten Teilvolumen des Speichervolumens zu dem inneren Abschnitt der Öffnung erstreckt, und eine zweite radiale Kontaktbohrung durch den Kolben, welche sich von dem äußeren Abschnitt der Öffnung zu dem zweiten Teilvolumen des Speichervolumens erstreckt, umfassen. Die hier beschriebene Ausbildung der durch den Kolben verlaufenden Bypassleitung ist leicht realisierbar.

Bei einer alternativen Ausführungsform der Bremsvorrichtung ist an dem Kolben ein Stift befestigt, welcher mit dem Kolben mitverstellbar ist, und welcher das Rückschlagventil zumindest bei einem Vorliegen des Kolbens in seiner Normalstellung in seinem offenen Zustand hält, während des Rückschlagventil mittels des zusammen mit dem aus seiner Normalstellung um zumindest den Mindestverstellweg verstellten Kolben mitverstellten Stifts in seinen geschlossenen Zustand geschaltet ist. Auch die hier beschriebene Ausbildung der Bremsvorrichtung ist baulich leicht umsetzbar.

Die vorausgehend beschriebenen Vorteile sind auch bei einem hydraulischen Bremssystem für ein Fahrzeug mit einer derartigen Bremsvorrichtung, dem an dem ersten Teilvolumen des Speichervolumens der Bremsvorrichtung angebundenen Bremszylinder und dem an dem zweiten Teilvolumen des Speichervolumens angebundenen Radbremszylinder gewährleistet.

Des Weiteren schafft auch ein Ausführen eines korrespondierenden Verfahrens zum Betreiben eines hydraulischen Bremssystems eines Fahrzeugs die oben beschriebenen Vorteile. Es wird ausdrücklich darauf hingewiesen, dass das Verfahren zum Betreiben eines hydraulischen Bremssystems eines Fahrzeugs gemäß den oben erläuterten Ausführungsformen der Bremsvorrichtung weitergebildet werden kann.

### Kurze Beschreibung der Zeichnungen

Weitere Merkmale und Vorteile der vorliegenden Erfindung werden nachfolgend anhand der Figuren erläutert. Es zeigen:
- Fig. 1a und 1b: schematische Darstellungen einer ersten Ausführungsform der Bremsvorrichtung;
- Fig. 2a bis 2d: schematische Darstellungen einer zweiten Ausführungsform der Bremsvorrichtung;
- Fig. 3: ein Flussdiagramm zum Erläutern einer Ausführungsform des Verfahrens zum Betreiben eines hydraulischen Bremssystems eines Fahrzeugs.

### Ausführungsformen der Erfindung

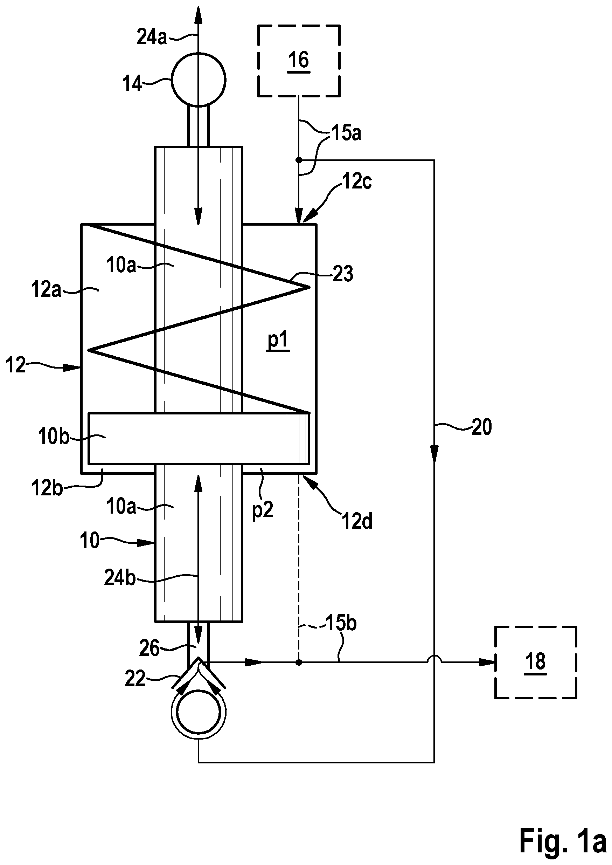

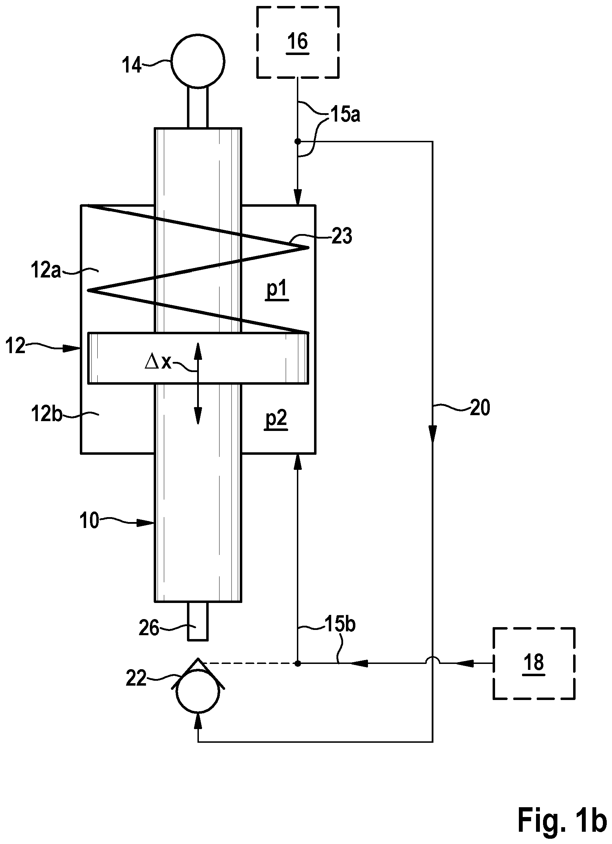

Fig. 1a und 1b zeigen schematische Darstellungen einer ersten Ausführungsform der Bremsvorrichtung.

Die im Weiteren beschriebene Bremsvorrichtung kann als Teil eines hydraulischen Bremssystems eines Fahrzeugs eingesetzt sein/werden. Eine Verwendbarkeit der Bremsvorrichtung ist auf keinen bestimmten Bremssystemtyp beschränkt. Das mit der Bremsvorrichtung ausgestattete Fahrzeug kann wahlweise ein Fahrzeug mit nur zwei Rädern oder ein Fahrzeug mit mehr als zwei Rädern sein. Unter dem Fahrzeug kann auch ein Fahrzeug ohne einen motorisierten Antrieb, wie beispielsweise ein (mittels Muskelkraft angetriebenes) Fahrrad, verstanden werden. Allerdings kann das Fahrzeug auch ein mit einem Motorantrieb ausgestattetes Fahrzeug, wie z.B. ein Elektrorad, ein Motorrad oder in Kraftfahrzeug, wie insbesondere ein Personenkraftwagen oder ein Lastkraftwagen, sein.

Die in Fig. 1a und 1b schematisch dargestellte Bremsvorrichtung hat einen Kolben 10, welcher innerhalb eines Speichervolumens 12 der Bremsvorrichtung mittels eines Betriebs eines Motors 14 verstellbar ist/verstellt wird. Der Kolben 10 unterteilt das Speichervolumen 12 in ein erstes Teilvolumen 12a und in ein zweites Teilvolumen 12b. An dem ersten Teilvolumen 12a des Speichervolumens 12, d.h. an einer Mündung 12c des ersten Teilvolumens 12a und/oder an einer an dem ersten Teilvolumen 12a mündenden ersten Leitungskomponente 15a, ist ein Bremszylinder 16 (hydraulisch) angebunden oder anbindbar. Der Bremszylinder 16 kann ein vorrichtungseigener oder vorrichtungsexterner Bremszylinder 16 sein. Unter dem Bremszylinder 16 kann eine hydraulische Vorrichtung verstanden werden, an welcher ein Bremsbetätigungselement derart anordbar/angeordnet ist, dass mittels einer zu- oder abnehmenden Betätigung des Bremsbetätigungselements Bremsflüssigkeit aus dem Bremszylinder 16 herausgedrückt oder eingesaugt ist/wird. Der Bremszylinder 16 kann beispielsweise ein Hauptbremszylinder sein. Unter dem Bremsbetätigungselement kann insbesondere ein Bremspedal oder ein Handbremshebel verstanden werden. Der Bremszylinder 16 ist derart an dem ersten Teilvolumen 12a des Speichervolumens 12 anbindbar/angebunden, dass Bremsflüssigkeit zwischen dem Bremszylinder 16 und dem ersten Teilvolumen 12a transferierbar ist/transferiert wird.

An dem zweiten Teilvolumen 12b des Speichervolumens 12, d.h. an einer Mündung 12d des zweiten Teilvolumens 12b und/oder an einer an dem zweiten Teilvolumen 12b mündenden zweiten Leitungskomponente 15b, ist ein Radbremszylinder 18 (hydraulisch) angebunden oder anbindbar. Obwohl dies in den Fig. 1a und 1b nicht bildlich wiedergegeben ist, kann zusätzlich zu dem Radbremszylinder 18 noch mindestens ein weiterer (nicht skizzierter) Radbremszylinder an dem zweiten Teilvolumen 12b entsprechend angebunden/anbindbar sein. Unter dem (mindestens einen) Radbremszylinder 18 kann wahlweise ein vorrichtungseigener Radbremszylinder 18 oder ein vorrichtungsexterner Radbremszylinder 18 verstanden werden. Der (mindestens eine) Radbremszylinder 18 ist derart an dem zweiten Teilvolumen 12b anbindbar oder angebunden, dass Bremsflüssigkeit zwischen dem zweiten Teilvolumen 12b und dem (mindestens einen) Radbremszylinder 18 transferierbar ist/transferiert wird.

An der Bremsvorrichtung ist auch eine Bypassleitung 20/ein Bypass so ausgebildet, dass zumindest bei einem Vorliegen des Kolbens 10 in einer sogenannten Normalstellung Bremsflüssigkeit von dem ersten Teilvolumen 12a und/oder dem daran angebundenen Bremszylinder 16 über die Bypassleitung 20 zu dem zweiten Teilvolumen 12b und/oder dem (mindestens einen) daran angebundenen Radbremszylinder 18 transferierbar ist/transferiert wird. Die Bypassleitung 20 kann sich beispielsweise von der ersten Leitungskomponente 15a zu der zweiten Leitungskomponente 15b erstrecken. Fig. 1a zeigt die Bremsvorrichtung mit dem in seiner Normalstellung vorliegenden Kolben 10. Solange Bremsflüssigkeit von dem ersten Teilvolumen 12a und/oder dem daran angebundenen Bremszylinder 16 über die Bypassleitung 20 zu dem zweiten Teilvolumen 12b und/oder dem (mindestens einen) daran angebundenen Radbremszylinder 18 transferierbar ist, ist ein in dem ersten Teilvolumen 12a vorliegender erster Druck p1 gleich einem in dem zweiten Teilvolumen 12b vorherrschenden zweiten Druck p2.

In der Bypassleitung 20 ist ein Rückschlagventil 22 angeordnet/ausgebildet, welches mittels des Kolbens 10 derart schaltbar/geschaltet ist, dass das Rückschlagventil 22 zumindest bei einem Vorliegen des Kolbens 10 in seiner Normalstellung in einem offenen Zustand vorliegt und mittels des aus seiner Normalstellung um zumindest einen vorgegebenen Mindestverstellweg Δx verstellten Kolbens 10 in einen geschlossenen Zustand geschaltet ist. Die vorteilhafte Anordnung und Ausbildung des mittels des Kolbens 10 schaltbaren Rückschlagventils 22 gewährleistet somit, dass der bei Vorliegen des Kolbens 10 in seiner Normalstellung ausführbare Bremsflüssigkeitstransfer von dem ersten Teilvolumen 12a und/oder dem daran angebundenen Bremszylinder 16 über die Bypassleitung 20 zu dem zweiten Teilvolumen 12b und/oder dem (mindestens einen) daran angebundenen Radbremszylinder 18 mittels des aus seiner Normalstellung um zumindest den vorgegebenen Mindestverstellweg Δx verstellten Kolbens 10 unterbunden ist. Außerdem dichtet der Kolben 10 das erste Teilvolumen 12 derart flüssigkeitsdicht von dem zweiten Teilvolumen 12 ab, dass ab einem Verstellen des Kolbens 10 aus seiner Normalstellung um zumindest den vorgegebenen Mindestverstellweg Δx, wie dies in Fig. 1b gezeigt ist, der in dem ersten Teilvolumen 12a vorliegende erste Druck p1 von dem in dem zweiten Teilvolumen 12b vorherrschenden zweiten Druck p2 abweichen kann.

Während eines Vorliegens des Kolbens 10 in seiner Normalstellung kann somit ein Fahrer des mit der Bremsvorrichtung der Fig. 1a und 1b ausgestatteten Fahrzeugs mittels einer Betätigung des an dem Bremszylinder 16 angeordneten Bremsbetätigungselements über die Bypassleitung 20 in den (mindestens einen) Radbremszylinder 18 einbremsen und auf diese Weise mittels seiner Fahrerbremskraft eine Bremsdrucksteigerung in dem (mindestens einen) Radbremszylinder 18 bewirken, wodurch das Fahrzeug verlangsamt oder in seinen Stillstand überführt wird. Bei Vorliegen des Kolbens 10 in seiner Normalstellung liegt damit eine mechanische Rückfallebene an der Bremsvorrichtung/dem damit ausgebildeten hydraulischen Bremssystem vor. Zusätzlich ist bei der Bremsvorrichtung der Fig. 1a und 1b der (mindestens eine) Radbremszylinder 18 mittels des Verstellens des Kolbens 10 aus seiner Normalstellung um zumindest den Mindestverstellweg Δx derart von dem Bremszylinder 16 hydraulisch abgekoppelt, dass mittels eines weiteren Verstellens des Kolbens 10 ein Bremsdruck in dem (mindestens einen) Radbremszylinder 18 moduliert werden kann. Somit kann nach dem Verstellen des Kolbens 10 um zumindest den vorgegebenen Mindestverstellweg Δx eine ABS-Funktion ausgeführt werden. Das mit der hier beschriebenen Bremsvorrichtung ausgestattete hydraulische Bremssystem kann deshalb als ein ABS-System bezeichnet werden.

Die vorteilhafte Anordnung und Ausbildung des Rückschlagventils 22 macht zusätzlich eine Ausbildung des Kolbens 10 zum Abdichten oder Abtrennen der Bypassleitung 20 mittels eines mechanischen Kontakts des Kolbens 10 mit mindestens einer Innenwand des Speichervolumens 12, wie dies der oben beschriebene Stand der Technik erfordert, überflüssig. Damit entfällt auch das Erfordernis des Stands der Technik zum Ausbilden des Kolbens 10 mit einer das erste Teilvolumen 12a begrenzenden ersten Fläche des Kolbens 10 größer als einer das zweite Teilvolumen 12b begrenzenden zweiten Fläche des Kolbens 10. Des Weiteren entfällt auch die Notwendigkeit zum Einhalten eines ersten Drucks p1 in dem ersten Teilvolumen 12a über dem zweiten Druck p2 in dem zweiten Teilvolumen 12b, damit der Kolben 10 durch Vergrößerung seines Durchmessers das erste Teilvolumen 12a flüssigkeitsdicht von dem zweiten Teilvolumen 12b abdichtet, wie dies beim oben beschriebenen Stand der Technik noch notwendig ist. Das Entfallen dieser herkömmlichen Notwendigkeiten trägt dazu bei, dass der Kolben 10 der hier beschriebenen Bremsvorrichtung mittels einer vergleichsweise kleinen Kraft aus seiner Normalstellung um zumindest den Mindestverstellweg Δx **verstellt** werden kann. Ein zum Verstellen des Kolbens 10 aus seiner Normalstellung um zumindest den Mindestverstellweg Δx anfallender Energieverbrauch ist auf diese Weise verglichen mit dem Stand der Technik reduziert. Trotz der hier beschriebenen Vorteile sind jedoch bei der Bremsvorrichtung der Fig. 1a und 1b dennoch die mechanische Rückfallebene bei Vorliegen des Kolbens 10 in seiner Normalstellung und die hydraulische Abkopplung des (mindestens einen) Radbremszylinders 18 von dem Bremszylinder 16 mittels des aus seiner Normalstellung um zumindest den Mindestverstellweg Δx verstellten Kolbens 10 realisiert.

Sobald der Motor 14 abgestellt ist, kann der Kolben 10 mittels einer (optionalen) Rückstellfeder 23 wieder in seine Normalstellung zurückverstellt werden. Ab einem Vorliegen des Kolbens 10 in seiner Normalstellung kann dann wieder über den Bremszylinder 16 in den (mindestens einen) Radbremszylinder 18 eingebremst werden. Außerdem ist gewährleistet, dass das Rückschlagventil 22 ab einem Vorliegen des Kolbens 10 in seiner Normalstellung wieder in seinen geöffneten Zustand überführt ist.

Vorteilhafterweise ist bei der Ausführungsform der Fig. 1a und 1b der Kolben 10 derart ausgebildet/geformt, dass der Kolben 10 einen zylindrischen Grundkörper 10a mit einem an dem Grundkörper 10a hervorstehenden Ringabschnitt 10b aufweist. Der Ringabschnitt 10b ist fest mit dem Grundkörper 10a verbunden. Vorzugsweise sind der Grundkörper 10a und der Ringabschnitt 10b als ein kompaktes Bauteil gemeinsam geformt, wie beispielsweise gemeinsam gegossen/spritzgegossen. Der Ringabschnitt 10b dichtet das auf einer ersten Seite des Ringabschnitts 10b liegende erste Teilvolumen 12a des Speichervolumens 12 von dem auf einer zweiten Seite des Ringabschnitts 10b liegenden zweiten Teilvolumen 12b des Speichervolumens 12 flüssigkeitsdicht ab. Demgegenüber erstreckt sich der zylinderförmige Grundkörper 10a ausgehend von einer auf der ersten Seite des Ringabschnitts 10b liegenden ersten Aussparung 24a durchgehend durch das Speichervolumen 12 bis zu einer auf der zweiten Seite des Ringabschnitts 10b liegenden zweiten Aussparung 24b. Die hier beschriebene Form des Kolbens 10 trägt zur zusätzlichen Reduzierung einer zu seinem Verstellen notwendigen Kraft, und damit auch zu dem beim Verstellen des Kolbens 10 anfallenden Energieverbrauch bei.

Bei der Ausführungsform der Fig. 1a und 1b ist an dem Kolben 10 beispielhaft ein Stift 26 befestigt, welcher mit dem Kolben 10 mitverstellbar ist/mitverstellt wird. Auch der Stift 26 kann gemeinsam mit dem Kolben 10 als ein kompaktes Bauteil hergestellt, wie beispielsweise gemeinsam gegossen/spritzgegossen sein. Der Stift 26 hält das Rückschlagventil 22 zumindest bei einem Vorliegen des Kolbens 10 in seiner Normalstellung in seinem offenen Zustand. Außerdem ist/wird der Stift 26 zusammen mit dem aus seiner Normalstellung um zumindest den Mindestverstellweg Δx verstellten Kolben 10 so mitverstellt, dass das Rückschlagventil 22 mittels des mitverstellten Stifts 26 in seinen geschlossenen Zustand geschaltet ist. Insbesondere kann das Rückschlagventil 22 derart ausgebildet sein, dass das Rückschlagventil 22 bei einem Entfernen des zusammen mit dem Kolben 10 mitverstellten Stifts 26 um zumindest den Mindestverstellweg Δx weg von dem Rückschlagventil 22 (automatisch) in seinen geschlossenen Zustand übergeht. Dies ist beispielsweise realisierbar, indem das Rückschlagventil 22 mit einer Federeinrichtung ausgebildet wird, deren Kraft so wirkt, dass, sobald der Stift 26 der Kraft der Federeinrichtung des Rückschlagventils 22 nicht mehr entgegenwirkt, die Kraft der Federeinrichtung das Rückschlagventil 22 in seinen geschlossenen Zustand überführt. Die hier beschriebene Ausbildung des Kolbens 10 mit dem daran befestigten Stift 26 ist jedoch nur beispielhaft zu interpretieren.

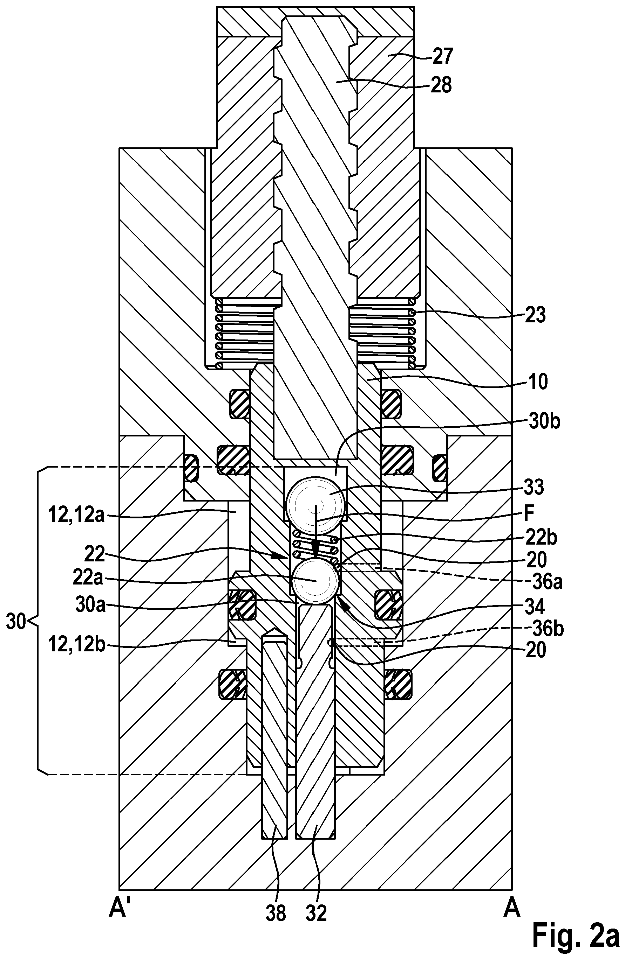

Fig. 2a bis 2d zeigen schematische Darstellungen einer zweiten Ausführungsform der Bremsvorrichtung.

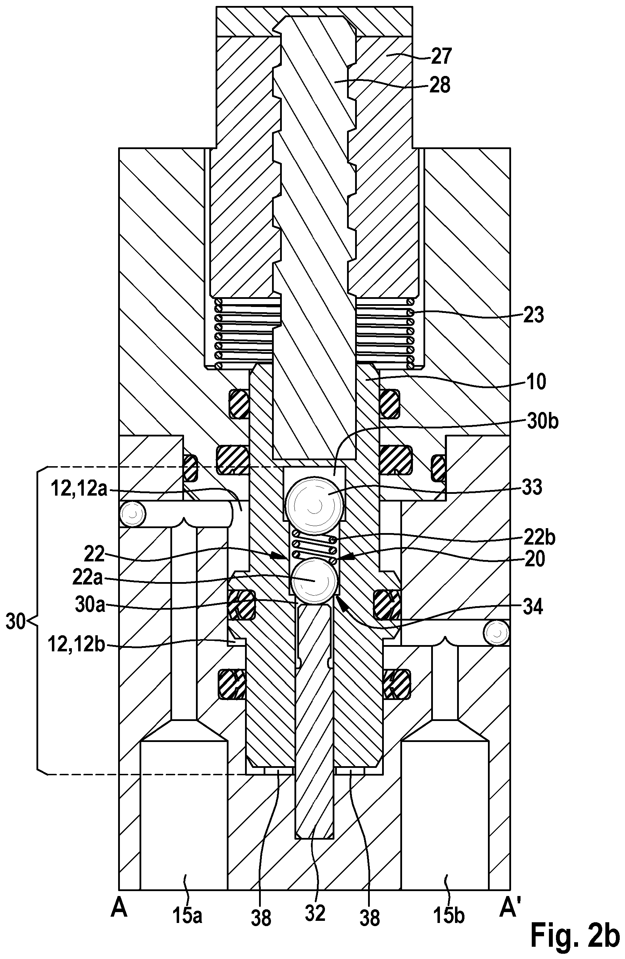

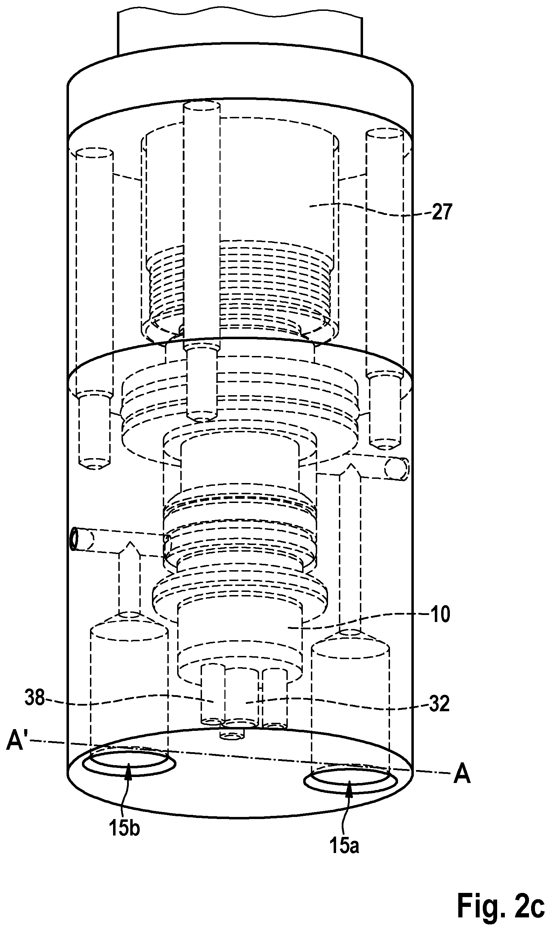

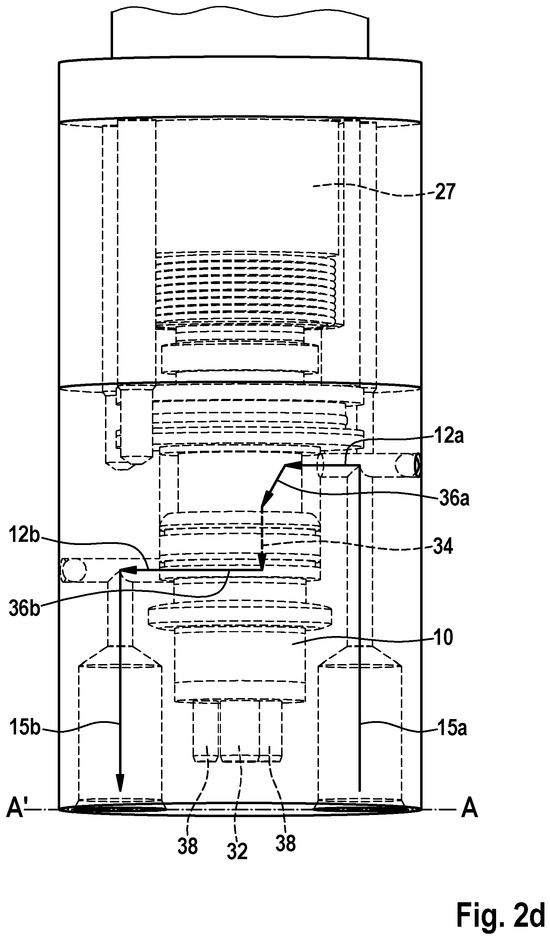

Die hier beschriebene Ausführungsform ist in den Fig. 2a und 2b jeweils als ein Querschnitt entlang der Linie AA' der Fig. 2c und 2d dargestellt, wobei ein Betrachter der Fig. 2a und 2b auf unterschiedliche Seiten entlang der Linie AA' blickt. Eine Verwendbarkeit der Bremsvorrichtung der Fig. 2a bis 2d ist weder auf einen bestimmten Bremssystemtyp noch einen speziellen Fahrzeugtyp/Kraftfahrzeugtyp beschränkt.

Die Fig. 2a und 2b zeigen den Kolben 10 jeweils in seiner Normalstellung. Der Kolben 10 wird vor allem mittels der Kraft der Rückstellfeder 23, welche beispielhaft als Drehfeder ausgebildet sein kann, in seiner Normalstellung gehalten. Ergänzend kann, sofern der in dem ersten Teilvolumen 12a vorliegende erste Druck p1 größer als der in dem zweiten Teilvolumen 12b vorliegende zweite Druck p2 ist, der Kolben 10 auch mittels einer resultierenden Druckbeaufschlagung in seine Normalstellung gedrückt sein. Ein Betrieb des Motors 14 bewirkt eine Drehung einer Mutter 27, welche mittels einer Spindel 28 in eine Linearbewegung des Kolbens 10 aus seiner Normalstellung heraus übersetzt wird. Vorzugsweise ist die Spindel 28 in den Kolben 10 eingepresst. Lediglich beispielhaft ist die Spindel 28 bei der hier beschriebenen Ausführungsform als nicht-selbsthemmende Steilgewindespindel ausgeführt, was bei einem Abschalten des Motors 14 aufgrund der Kraft der Rückstellfeder 23 und evtl. der Druckbeaufschlagung eine automatische Rückverstellbewegung des aus seiner Normalstellung verstellten Kolbens 10 zurück in seine Normalstellung bewirkt. Eine aktive Motorunterstützung des Motors 14 ist somit zum Zurückverstellen des Kolbens 10 in seine Normalstellung nicht notwendig.

Wie anhand der Fig. 2a bis 2d erkennbar ist, sind bei dieser Ausführungsform die Bypassleitung 20 und das Rückschlagventil 22 innerhalb des Kolbens 10 ausgebildet. Man kann dabei auch von einer Integration der Bypassleitung 20 und des Rückschlagventils 22 in den Kolben 10 sprechen. Das innerhalb des Kolbens 10 ausgebildete Rückschlagventil 22 ist bei Vorliegen des Kolbens 10 in seiner Normalstellung mittels eines an der Bremsvorrichtung fest angeordneten und in eine Öffnung 30 des Kolbens 10 hineinragenden Stößels 32 in seinem offenen Zustand gehalten. Der Stößel 32 ist derart fest an der Bremsvorrichtung angeordnet/befestigt, dass eine Verstellbewegung des mittels des Motors 14 verstellten Kolbens 10 eine Relativbewegung des Stößels 32 innerhalb der Öffnung 30 bewirkt. Diese Relativbewegung des Stößels 32 kann als ein "Hineinziehen des Stößels 32 in die Öffnung 30" oder ein "Herausziehen des Stößels 32 aus der Öffnung 30" umschrieben werden. Auf diese Weise wird das Rückschlagventil 22, sobald der Kolben aus seiner Normalstellung um zumindest den Mindestverstellweg Δx gegenüber dem Stößel 32 verstellt ist, in seinen geschlossenen Zustand geschaltet.

Die Öffnung 30 umfasste einen äußeren Abschnitt 30a und einen inneren Abschnitt 30b, welche derart ausgebildet sind, dass ein maximaler Flächeninhalt eines senkrecht zu einer Längsrichtung der Öffnung 30 ausgerichteten Querschnitts des äußeren Abschnitts 30a kleiner als ein maximaler Flächeninhalt eines senkrecht zu der Längsrichtung der Öffnung 30 ausgerichteten Querschnitts des inneren Abschnitts 30b ist. Zwischen dem äußeren Abschnitt 30a und dem inneren Abschnitt 30b ist an der Öffnung eine Verengung/Einengung 34, wie z.B. eine radiale Stufe 34, ausgebildet.

Vorteilhafterweise umfasst das innerhalb des Kolbens 10 ausgebildete Rückschlagventil 22 einen Ventilkörper 22a und eine Federeinrichtung 22b, welche innerhalb der Öffnung 30 angeordnet sind. Der Ventilkörper 22a kann kugelförmig ausgebildet sein. Zum Abstützen der Federeinrichtung 22b auf ihrer von dem Ventilkörper 22a weg gerichteten Seite kann ein kugelförmiger Federsitz 33 in der Öffnung 30 des Kolbens 10 befestigt sein.

Wie in den Fig. 2a und 2b erkennbar ist, ist der Ventilkörper 22a bei einem Vorliegen des Kolbens 10 in seiner Normalstellung mittels des in die Öffnung 30 des Kolbens 10 hineinragenden Stößels 32 entgegen einer Kraft F der Federeinrichtung 22b von der an der Öffnung 30 ausgebildeten Verengung 34 weggehalten. Bei Vorliegen des Kolbens 10 in seiner Normalstellung liegt somit kein mechanischer Kontakt zwischen dem Ventilkörper 22a und der Verengung 34 vor. Hingegen drückt ab Verstellen des Kolbens 10 aus seiner Normalstellung um zumindest den Mindestverstellweg Δx (und "Herausziehen des Stößels 32 aus der Öffnung 30" um zumindest den Mindestverstellweg Δx) die Kraft F der Federeinrichtung 22b den Ventilkörper 22a so gegen die Verengung 34, dass mittels des mechanischen Kontakts des Ventilkörpers 22a mit der Verengung 34 der äußere Abschnitt 30a der Öffnung 30 flüssigkeitsdicht von dem inneren Abschnitt 30b der Öffnung 30 abgedichtet ist.

Die innerhalb des Kolbens 10 ausgebildete Bypassleitung 20 umfasst eine erste radiale Kontaktbohrung 36a durch den Kolben 10, welche sich von dem ersten Teilvolumen 12a des Speichervolumens 12 zu dem inneren Abschnitt 30b der Öffnung 30 erstreckt, und eine zweite radiale Kontaktbohrung 36b durch den Kolben 10, welche sich von dem äußeren Abschnitt 30a der Öffnung 30b zu dem zweiten Teilvolumen 12b des Speichervolumens 12 erstreckt.

Bei Vorliegen des Kolbens 10 in seiner Normalstellung kann aufgrund des mittels des Stößels 32 verhinderten mechanischen Kontakts zwischen dem Ventilkörper 22a und der Verengung 34 ein Bremsflüssigkeitstransfer zwischen dem ersten Teilvolumen 12a des Speichervolumens 12 und dem zweiten Teilvolumen 12b des Speichervolumens 12 durch die erste radiale Kontaktbohrung 36a, die Verengung 34 der Öffnung 30 und die zweite radiale Kontaktbohrung 36b stattfinden. Darum liegt das Rückschlagventil 22 bei Vorliegen des Kolbens 10 in seiner Normalstellung in seinen offenen Zustand vor. Demgegenüber ist ab Verstellen des Kolbens 10 aus seiner Normalstellung um zumindest den Mindestverstellweg Δx (und "Herausziehen des Stößels 32 aus der Öffnung 30" um zumindest den Mindestverstellweg Δx) die Verengung 34 der Öffnung 30 mittels des mechanischen Kontakts des Ventilkörpers 22a mit der Verengung 34 so abgedichtet, dass ein derartiger Bremsflüssigkeitstransfer zwischen dem ersten Teilvolumen 12a und dem zweiten Teilvolumen 12b unterbunden ist und das Rückschlagventil 22 in seinen geschlossenen Zustand überführt ist. Sobald das Rückschlagventil 22 geschlossen ist, kann mittels eines weiteren Hubs des Kolbens 10 Volumen aus dem (mindestens einen) Radbremszylinder 18 in das Speichervolumen 12 eingesaugt werden, wodurch eine Modulation des Bremsdrucks in dem (mindestens einen) Radbremszylinder 18 bewirkbar ist. Auch während der Modulation bleibt das Rückschlagventil 22 aufgrund des aufrecht erhaltenen mechanischen Kontakts des Ventilkörpers 22a mit der Verengung 34 in seinem geschlossenen Zustand. Erst durch Zurückverstellen des Kolbens 10 in seine Normalstellung wird der mechanische Kontakt des Ventilkörpers 22a mit der Verengung 34 durch das "Hineinziehen des Stößels 32 in die Öffnung 30" aufgehoben und das Rückschlagventil 22 in seinen offenen Zustand überführt.

Wie in den Fig. 2a bis 2d zusätzlich erkennbar ist, kann der Kolben 10 mittels mindestens eines Führungsstiftes 38 geführt sein. Der mindestens eine Führungsstift 38 kann an dem Kolben 10 befestigt sein und in mindestens eine kolbenexterne Führungsöffnung hineinragen. Alternativ kann der mindestens eine Führungsstift 38 auch extern von dem Kolben 10 befestigt sein und in mindestens eine an dem Kolben 10 ausgebildete Führungsöffnung hineinragen. Lediglich beispielhaft ist bei der Ausführungsform der Fig. 2a bis 2d der Kolben 10 mittels dreier Führungsstifte 38 geführt.

Bezüglich weiterer Merkmale und Eigenschaften der Bremsvorrichtung der Fig. 2a bis 2d und ihrer Vorteile wird auf die Beschreibung der Fig. 1a und 1b verwiesen.

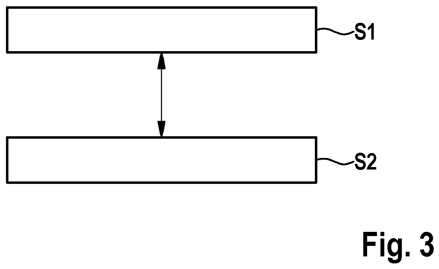

Fig. 3 zeigt ein Flussdiagramm zum Erläutern einer Ausführungsform des Verfahrens zum Betreiben eines hydraulischen Bremssystems eines Fahrzeugs.

Das im Weiteren beschriebene Verfahren kann mit (nahezu) jedem hydraulischen Bremssystem eines Fahrzeugs ausgeführt werden, welches mit einem innerhalb eines Speichervolumens des hydraulischen Bremssystems verstellbaren Kolben ausgestattet ist, der das Speichervolumen in ein erstes Teilvolumen und in ein zweites Teilvolumen unterteilt.

In einem Verfahrensschritt S1 wird eine Bypassleitung, über welche zumindest bei einem Vorliegen des Kolbens in seiner Normalstellung Bremsflüssigkeit von dem ersten Teilvolumen und/oder einem an dem ersten Teilvolumen angebundenen Bremszylinder zu dem zweiten Teilvolumen und/oder einem an dem zweiten Teilvolumen angebundenen Radbremszylinder transferierbar ist, offen geschaltet und/oder offengehalten. Dazu wird ein in der Bypassleitung angeordnetes Rückschlagventil, welches zumindest bei einem Vorliegen des Kolbens in seiner Normalstellung in einem offenen Zustand vorliegt, durch ein Verstellen und/oder Halten des Kolbens in seiner Normalstellung in dem offenen Zustand überführt und/oder gehalten.

Hingegen wird in einem Verfahrensschritt S2 der Bremsflüssigkeitstransfers über/durch die Bypassleitung durch Verstellen des Kolbens aus seiner Normalstellung um zumindest einen vorgegebenen Mindestverstellweg unterbrochen. Dies geschieht, indem durch das mittels eines Betriebs eines Motors bewirkte Verstellen des Kolbens aus seiner Normalstellung um zumindest den vorgegebenen Mindestverstellweg das Rückschlagventil mittels des aus seiner Normalstellung um zumindest den Mindestverstellweg verstellten Kolbens in einen geschlossenen Zustand geschaltet wird.

Die Verfahrensschritte S1 und S2 können abwechselnd ausgeführt werden.

## Patentansprüche

1. Bremsvorrichtung für ein hydraulisches Bremssystem eines Fahrzeugs mit:
einem innerhalb eines Speichervolumens (12) mittels eines Betriebs eines Motors (14) der Bremsvorrichtung verstellbaren Kolben (10), welcher das Speichervolumen (12) in ein erstes Teilvolumen (12a) und in ein zweites Teilvolumen (12b) unterteilt, wobei an dem ersten Teilvolumen (12a) ein vorrichtungseigener oder vorrichtungsexterner Bremszylinder (16) derart angebunden oder anbindbar ist, dass Bremsflüssigkeit zwischen dem Bremszylinder (16) und dem ersten Teilvolumen (12a) transferierbar ist, und an dem zweiten Teilvolumen (12b) ein vorrichtungseigener oder vorrichtungsexterner Radbremszylinder (18) derart angebunden oder anbindbar ist, dass Bremsflüssigkeit zwischen dem zweiten Teilvolumen (12b) und dem Radbremszylinder (18) transferierbar ist; und
einer Bypassleitung (20), wobei zumindest bei einem Vorliegen des Kolbens (10) in seiner Normalstellung Bremsflüssigkeit von dem ersten Teilvolumen (12a) und/oder dem daran angebundenen Bremszylinder (16) über die Bypassleitung (20) zu dem zweiten Teilvolumen (12b) und/oder dem daran angebundenen Radbremszylinder (18) transferierbar ist, während dieser Bremsflüssigkeitstransfer über die Bypassleitung (20) mittels des aus seiner Normalstellung um zumindest einen vorgegebenen Mindestverstellweg (Δx) verstellten Kolbens (10) unterbunden ist;
**gekennzeichnet durch**
ein in der Bypassleitung (20) angeordnetes Rückschlagventil (22), welches mittels des Kolbens (10) derart schaltbar ist, dass das Rückschlagventil (22) zumindest bei einem Vorliegen des Kolbens (10) in seiner Normalstellung in einem offenen Zustand vorliegt und mittels des aus seiner Normalstellung um zumindest den Mindestverstellweg (Δx) verstellten Kolbens (10) in einen geschlossenen Zustand geschaltet ist.

2. Bremsvorrichtung nach Anspruch 1, wobei der Kolben (10) einen zylinderförmigen Grundkörper (10a) mit einem an dem Grundkörper (10a) hervorstehenden Ringabschnitt (10b) aufweist, wobei der Ringabschnitt (10b) des Kolbens (10) das auf einer ersten Seite des Ringabschnitts (10b) liegende erste Teilvolumen (12a) des Speichervolumens (12) von dem auf einer zweiten Seite des Ringabschnitts (10b) liegenden zweiten Teilvolumen (12b) des Speichervolumens (12) flüssigkeitsdicht abdichtet, und wobei der zylinderförmige Grundkörper (10a) sich ausgehend von einer auf der ersten Seite des Ringabschnitts (10b) liegenden ersten Aussparung (24a) durchgehend durch das Speichervolumen (12) bis zu einer auf der zweiten Seite des Ringabschnitts (10b) liegenden zweiten Aussparung (24b) erstreckt.

3. Bremsvorrichtung nach Anspruch 1 oder 2, wobei der Kolben (10) mittels mindestens eines Führungsstiftes (38) geführt ist.

4. Bremsvorrichtung nach einem der vorhergehenden Ansprüche, wobei die Bypassleitung (20) und das Rückschlagventil (22) innerhalb des Kolbens (10) ausgebildet sind.

5. Bremsvorrichtung nach Anspruch 4, wobei das innerhalb des Kolbens (10) ausgebildete Rückschlagventil (22) bei einem Vorliegen des Kolbens (10) in seiner Normalstellung mittels eines an der Bremsvorrichtung fest angeordneten und in eine Öffnung (30) des Kolbens (10) hineinragenden Stößels (32) in seinen offenen Zustand gehalten ist, während der aus seiner Normalstellung um zumindest den Mindestverstellweg (Δx) verstellte Kolben (10) so gegenüber dem Stößel (32) verstellt ist, dass das Rückschlagventil (22) in seinen geschlossenen Zustand geschaltet ist.

6. Bremsvorrichtung nach Anspruch 5, wobei das innerhalb des Kolbens (10) ausgebildete Rückschlagventil (22) einen Ventilkörper (22a) und eine Federeinrichtung (22b) umfasst, wobei der Ventilkörper (22a) bei einem Vorliegen des Kolbens (10) in seiner Normalstellung mittels des in die Öffnung (30) des Kolbens (10) hineinragenden Stößels (32) entgegen einer Kraft (F) der Federeinrichtung (22b) von einer an der Öffnung (30) ausgebildeten Verengung (34) weg gehalten ist, während ab Verstellen des Kolbens (10) aus seiner Normalstellung um zumindest den Mindestverstellweg (Δx) die Kraft (F) der Federeinrichtung (22b) den Ventilkörper (22a) so gegen die Verengung (34) drückt, dass mittels des mechanischen Kontakts des Ventilkörpers (22a) mit der Verengung (34) ein auf einer ersten Seite der Verengung (34) liegender äußerer Abschnitt (30a) der Öffnung (30) flüssigkeitsdicht von einem auf einer zweiten Seite der Verengung (34) liegenden inneren Abschnitt (30b) der Öffnung (30) abgedichtet ist.

7. Bremsvorrichtung nach Anspruch 6, wobei die innerhalb des Kolbens (10) ausgebildete Bypassleitung (20) eine erste radiale Kontaktbohrung (36a) durch den Kolben (10), welche sich von dem ersten Teilvolumen (12a) des Speichervolumens (12) zu dem inneren Abschnitt (30b) der Öffnung (30) erstreckt, und eine zweite radiale Kontaktbohrung (36b) durch den Kolben (10), welche sich von dem äußeren Abschnitt (30a) der Öffnung (30) zu dem zweiten Teilvolumen (12b) des Speichervolumens (12) erstreckt, umfasst.

8. Bremsvorrichtung nach einem der Ansprüche 1 bis 3, wobei an dem Kolben (10) ein Stift (26) befestigt ist, welcher mit dem Kolben (10) mitverstellbar ist, und welcher das Rückschlagventil (22) zumindest bei einem Vorliegen des Kolbens(10) in seiner Normalstellung in seinem offenen Zustand hält, während des Rückschlagventil (22) mittels des zusammen mit dem aus seiner Normalstellung um zumindest den Mindestverstellweg (Δx) verstellten Kolben (10) mitverstellten Stifts (26) in seinen geschlossenen Zustand geschaltet ist.

9. Hydraulisches Bremssystem für ein Fahrzeug mit:
einer Bremsvorrichtung nach einem der vorhergehenden Ansprüche;
dem an dem ersten Teilvolumen (12a) des Speichervolumens (12) der Bremsvorrichtung angebundenen Bremszylinder (16); und
dem an dem zweiten Teilvolumen (12b) des Speichervolumens (12) angebundenen Radbremszylinder (18).

10. Verfahren zum Betreiben eines hydraulischen Bremssystems eines Fahrzeugs mit einem innerhalb eines Speichervolumens (12) des hydraulischen Bremssystems verstellbaren Kolben (10), welcher das Speichervolumen (12) in ein erstes Teilvolumen (12a) und in ein zweites Teilvolumen (12b) unterteilt, mit dem Schritt:
Unterbinden eines Bremsflüssigkeitstransfers über eine Bypassleitung (20), über welche zumindest bei einem Vorliegen des Kolbens (10) in seiner Normalstellung Bremsflüssigkeit von dem ersten Teilvolumen (12a) und/oder einem an dem ersten Teilvolumen (12a) angebundenen Bremszylinder (16) zu dem zweiten Teilvolumen (12b) und/oder einem an dem zweiten Teilvolumen (12b) angebundenen Radbremszylinder (18) transferierbar ist, durch Verstellen des Kolbens (10) aus seiner Normalstellung um zumindest einen vorgegebenen Mindestverstellweg (Δx) mittels eines Betriebs eines Motors (14);
**dadurch gekennzeichnet, dass**
ein in der Bypassleitung (20) angeordnetes Rückschlagventil (22), welches zumindest bei einem Vorliegen des Kolbens (10) in seiner Normalstellung in einem offenen Zustand vorliegt, mittels des aus seiner Normalstellung um zumindest den Mindestverstellweg (Δx) verstellten Kolbens (10) in einen geschlossenen Zustand geschaltet wird (S2).

## Claims

1. Brake device for a hydraulic braking system of a vehicle with:
a piston (10) which can be adjusted within an accumulator volume (12) by means of an operation of a motor (14) of the brake device and divides the accumulator volume (12) into a first part volume (12a) and a second part volume (12b), wherein a brake cylinder (16), which is inherent or external to the device, is attached or can be attached to the first part volume (12a) in such a way that brake fluid can be transferred between the brake cylinder (16) and the first part volume (12a), and a wheel brake cylinder (18), which is either inherent or external to the device, is attached or can be attached to the second part volume (12b) in such a way that brake fluid can be transferred between the second part volume (12b) and the wheel brake cylinder (18); and
a bypass line (20), wherein, at least in the case of the presence of the piston (10) in its normal position, brake fluid can be transferred from the first part volume (12a) and/or the brake cylinder (16) attached thereto via the bypass line (20) to the second part volume (12b) and/or the wheel brake cylinder (18) attached thereto, while this transfer of brake fluid via the bypass line (20) is prevented by means of the piston (10) adjusted by at least a predetermined minimum adjustment travel (Δx) from its normal position;
**characterized by**
a check valve (22) which is arranged in the bypass line (20) and can be switched by means of the piston (10) in such a way that the check valve (22) is open at least when the piston (10) is present in its normal position and is switched into a closed state by means of the piston (10) adjusted by at least the minimum adjustment travel (Δx) from its normal position.

2. Brake device according to Claim 1, wherein the piston (10) has a cylindrical main body (10a) with an annular portion (10b) projecting on the main body (10a), wherein the annular portion (10b) of the piston (10) seals the first part volume (12a) of the accumulator volume (12) which lies on a first side of the annular portion (10b) from that second part volume (12b) of the accumulator volume (12) which lies on a second side of the annular portion (10b) in a liquid-tight manner, and wherein the cylindrical main body (10a) extends, starting from a first recess (24a) which lies on the first side of the annular portion (10b), through the accumulator volume (12) as far as a second recess (24b) which lies on the second side of the annular portion (10b).

3. Brake device according to Claim 1 or 2, wherein the piston (10) is guided by means of at least one guide pin (38).

4. Brake device according to one of the preceding claims, wherein the bypass line (20) and the check valve (22) are formed within the piston (10).

5. Brake device according to Claim 4, wherein, in the case of the presence of the piston (10) in its normal position, the check valve (22) formed within the piston (10) is held in its open state by means of a tappet (32) which is arranged fixedly on the brake device and protrudes into an opening (30) of the piston (10), while the piston (10), adjusted from its normal position by at least the minimum adjustment travel (Δx), is adjusted in relation to the tappet (32) in such a way that the check valve (22) is switched into its closed state.

6. Brake device according to Claim 5, wherein the check valve (22) formed within the piston (10) comprises a valve body (22a) and a spring device (22b), wherein, in the case of the presence of the piston (10) in its normal position, the valve body (22a) is held away from a constriction (34) formed at the opening (30), counter to a force (F) of the spring device (22b), by means of the tappet (32) which protrudes into the opening (30) of the piston (10), while, from the adjustment of the piston (10) from its normal position by at least the minimum adjustment travel (Δx), the force (F) of the spring device (22b) presses the valve body (22a) against the constriction (34) in such a way that an outer portion (30a) of the opening (30) which lies on a first side of the constriction (34) is sealed in a fluid-tight manner, by means of the mechanical contact of the valve body (22a) with the constriction (34), from an inner portion (30b) of the opening (30) which lies on a second side of the constriction (34).

7. Brake device according to Claim 6, wherein the by-pass line (20) formed within the piston (10) comprises a first radial contact bore (36a) through the piston (10), which extends from the first part volume (12a) of the accumulator volume (12) to the inner portion (30b) of the opening (30), and a second radial contact bore (36b) through the piston (10), which extends from the outer portion (30a) of the opening (30) to the second part volume (12b) of the accumulator volume (12).

8. Brake device according to one of Claims 1 to 3, wherein a pin (26) is fastened to the piston (10), which pin is adjustable together with the piston (10), and which pin holds the check valve (22) in its open state at least in the presence of the piston (10) in its normal position, while the check valve (22) is switched into its closed state by means of the pin (26), which has been adjusted together with the piston (10) which has been adjusted from its normal position by at least the minimum adjustment travel (Δx).

9. Hydraulic brake system for a vehicle with:
a valve device according to one of the preceding claims;
the brake cylinder (16) which is attached to the first part volume (12a) of the accumulator volume (12) of the brake device; and
the wheel brake cylinder (18) which is attached to the second part volume (12b) of the accumulator volume (12).

10. Method for operating a hydraulic braking system of a vehicle with a piston (10) which can be adjusted within an accumulator volume (12) of the hydraulic braking system and divides the accumulator volume (12) into a first part volume (12a) and into a second part volume (12b), with the step:
preventing a transfer of brake fluid via a bypass line (20), via which, at least in the presence of the piston (10) in its normal position, brake fluid can be transferred from the first part volume (12a) and/or a brake cylinder (16), which is attached to the first part volume (12a), to the second part volume (12b) and/or a wheel brake cylinder (18), which is attached to the second part volume (12b), by adjustment of the piston (10) from its normal position by at least a predetermined minimum adjustment travel (Δx) by means of operation of a motor (14);
**characterized in that**
a check valve (22) which is arranged in the bypass line (20) and is present in an open state at least in the presence of the piston (10) in its normal position, is switched into a closed state (S2) by means of the piston (10) which has been adjusted from its normal position by at least the minimum adjustment travel (Δx).

## Revendications

1. Dispositif de freinage pour un système de freinage hydraulique d'un véhicule avec :
un piston (10) pouvant être ajusté au moyen d'un fonctionnement d'un moteur (14) du dispositif de freinage à l'intérieur d'un volume de stockage (12), lequel divise le volume de stockage (12) en un premier volume partiel (12a) et en un deuxième volume partiel (12b), un cylindre de frein (16) propre au dispositif ou externe au dispositif étant attaché ou pouvant être attaché au premier volume partiel (12a) de telle manière que du liquide de frein peut être transféré entre le cylindre de frein (16) et le premier volume partiel (12a), et un cylindre de frein de roue (18) propre au dispositif ou externe au dispositif étant attaché ou pouvant être attaché au deuxième volume partiel (12b) de telle manière que du liquide de frein peut être transféré entre le deuxième volume partiel (12b) et le cylindre de frein de roue (18) ; et
une conduite de dérivation (20), du liquide de frein pouvant être transféré du premier volume partiel (12a) et/ou du cylindre de frein (16) attaché à celui-ci au deuxième volume partiel (12b) et/ou au cylindre de frein de roue (18) attaché à celui-ci par la conduite de dérivation (20) au moins en présence du piston (10) dans sa position normale, tandis que ledit transfert de liquide de frein est empêché au moyen du piston (10) ajusté hors de sa position normale d'au moins une course d'ajustement minimale (Δx) prédéfinie par la conduite de dérivation (20) ;
**caractérisé par**
une soupape antiretour (22) disposée dans la conduite de dérivation (20), laquelle peut être commutée au moyen du piston (10) de telle manière que la soupape antiretour (22) est présente dans un état ouvert au moins en présence du piston (10) dans sa position normale et est commutée dans un état fermé au moyen du piston (10) ajusté hors de sa position normale d'au moins la course d'ajustement minimale (Δx).

2. Dispositif de freinage selon la revendication 1, le piston (10) comportant un corps de base (10a) de forme cylindrique avec une section annulaire (10b) faisant saillie sur le corps de base (10a), la section annulaire (10b) du piston (10) rendant étanche aux liquides le premier volume partiel (12a) du volume de stockage (12) situé sur un premier côté de la section annulaire (10b) par rapport au deuxième volume partiel (12b) du volume de stockage (12) situé sur un deuxième côté de la section annulaire (10b), et le corps de base (10a) de forme cylindrique s'étendant en partant d'un premier évidement (24a) situé sur le premier côté de la section annulaire (10b) en traversant le volume de stockage (12) jusqu'à un deuxième évidement (24b) situé sur le deuxième côté de la section annulaire (10b).

3. Dispositif de freinage selon la revendication 1 ou 2, le piston (10) étant guidé au moyen d'au moins une tige de guidage (38).

4. Dispositif de freinage selon l'une des revendications précédentes, la conduite de dérivation (20) et la soupape antiretour (22) étant réalisées à l'intérieur du piston (10).

5. Dispositif de freinage selon la revendication 4, la soupape antiretour (22) réalisée à l'intérieur du piston (10) étant maintenue dans son état ouvert au moyen d'un coulisseau (32) disposé fixement sur le dispositif de freinage et dépassant dans une ouverture (30) du piston (10) en présence du piston (10) dans sa position normale, tandis que le piston (10) ajusté hors de sa position normale d'au moins la course d'ajustement minimale (Δx) est ajusté de telle sorte par rapport au coulisseau (32) que la soupape antiretour (22) est commutée dans sa position fermée.

6. Dispositif de freinage selon la revendication 5, la soupape antiretour (22) réalisée à l'intérieur du piston (10) comprenant un corps (22a) de soupape et un système de ressort (22b), le corps (22a) de soupape étant maintenu à l'écart d'un rétrécissement (34) réalisé sur l'ouverture (30) à l'encontre d'une force (F) du système de ressort (22b) au moyen du coulisseau (32) dépassant dans l'ouverture (30) du piston (10) en présence du piston (10) dans sa position normale, tandis que la force (F) du système de ressort (22b) pousse le corps (22a) de soupape de telle sorte contre le rétrécissement (34) à partir de l'ajustement du piston (10) hors de sa position normale d'au moins la course d'ajustement minimale (Δx) qu'une section extérieure (30a) de l'ouverture (30) située sur un premier côté du rétrécissement (34) est rendue étanche aux liquides par rapport à une section intérieure (30b) de l'ouverture (30) située sur un deuxième côté du rétrécissement (34) au moyen du contact mécanique du corps (22a) de soupape avec le rétrécissement (34).

7. Dispositif de freinage selon la revendication 6, la conduite de dérivation (20) réalisée à l'intérieur du piston (10) comprenant un premier alésage de contact radial (36a) à travers le piston (10), lequel s'étend depuis le premier volume partiel (12a) du volume de stockage (12) jusqu'à la section intérieure (30b) de l'ouverture (30), et un deuxième alésage de contact radial (36b) à travers le piston (10), lequel s'étend depuis la section extérieure (30a) de l'ouverture (30) jusqu'au deuxième volume partiel (12b) du volume de stockage (12).

8. Dispositif de freinage selon l'une des revendications 1 à 3, une tige (26) étant fixée sur le piston (10), laquelle peut être ajustée conjointement avec le piston (10) et qui maintient la soupape antiretour (22) dans son état ouvert au moins en présence du piston (10) dans sa position normale, tandis que la soupape antiretour (22) est commutée dans son état fermé au moyen de la tige (26) ajustée conjointement avec le piston (10) ajusté hors de sa position normale d'au moins la course d'ajustement minimale (Δx).

9. Système de freinage hydraulique pour un véhicule, avec :
un dispositif de freinage selon l'une des revendications précédentes ;
le cylindre de frein (16) attaché au premier volume partiel (12a) du volume de stockage (12) du dispositif de freinage ; et
le cylindre de frein de roue (18) attaché au deuxième volume partiel (12b) du volume de stockage (12).

10. Procédé destiné à faire fonctionner un système de freinage hydraulique d'un véhicule avec un piston (10) ajustable à l'intérieur d'un volume de stockage (12) du système de freinage hydraulique, lequel divise le volume de stockage (12) en un premier volume partiel (12a) et en un deuxième volume partiel (12b), avec l'étape :
empêchement d'un transfert de liquide de frein par une conduite de dérivation (20), par laquelle du liquide de frein peut être transféré depuis le premier volume partiel (12a) et/ou un cylindre de frein (16) attaché au premier volume partiel (12a) au deuxième volume partiel (12b) et/ou un cylindre de frein de roue (18) attaché au deuxième volume partiel (12b) au moins en présence du piston (10) dans sa position normale, par ajustement du piston (10) hors de sa position normale d'au moins une course d'ajustement minimale (Δx) prédéfinie au moyen d'un fonctionnement d'un moteur (14) ;
**caractérisé en ce que**
une soupape antiretour (22) disposée dans la conduite de dérivation (20), laquelle est présente dans un état ouvert au moins en présence du piston (10) dans sa position normale, est commutée dans un état fermé au moyen du piston (10) ajusté hors de sa position normale d'au moins la course d'ajustement minimale (Δx) (E2).
